**Europäisches Patentamt**

**European Patent Office**

**Office européen des brevets**

(19)

(11) **EP 1 206 063 A2**

(12) ## EUROPÄISCHE PATENTANMELDUNG

(43) Veröffentlichungstag:
**15.05.2002 Patentblatt 2002/20**

(51) Int Cl.[7]: **H04L 1/24**

(21) Anmeldenummer: **01125781.3**

(22) Anmeldetag: **29.10.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **31.10.2000 DE 10053981**

(71) Anmelder: **Noll, Uwe
64285 Darmstadt (DE)**

(72) Erfinder:
- **Dratch, Valerie
  195271 St. Petersburg (RU)**
- **Noll, Uwe
  64285 Darmstadt (DE)**

(74) Vertreter: **Gornott, Dietmar, Dipl.-Ing.
Zilleweg 29
64291 Darmstadt (DE)**

(54) **Verfahren zur Analyse des zeitlichen Ablaufs von Prozessen in Echtzeit**

(57) Bei einem Verfahren zur Analyse des zeitlichen Ablaufs von Prozessen in Echtzeit, insbesondere von Störungsbeseitigungen in Telekommunikationsnetzen, wobei die Bearbeitungszeit mehrere Zeitabschnitte umfaßt, werden die Dauern der Zeitabschnitte jeweils eines Prozesses einem Computer zugeführt, quadriert, normiert und in einem Speicher als Vektor abgelegt. Die Vektoren mehrerer Prozesse werden in Gruppen (Cluster) aufgeteilt, wobei die Vektoren jeweils innerhalb einer Gruppe statistisch verarbeitet werden.

Fig.3

EP 1 206 063 A2

**Beschreibung**

Die Erfindung betrifft ein Verfahren zur Analyse des zeitlichen Ablaufs von Prozessen in Echtzeit, insbesondere von Störungsbeseitigungen in Telekommunikationsnetzen, wobei die Bearbeitungszeit mehrere Zeitabschnitte umfaßt.

Bei Prozessen, die in mehreren Zeitabschnitten ablaufen und häufig in unterschiedlichen Situationen und von unterschiedlichen Mitarbeitern bzw. unterschiedlichen Einrichtungen ausgeführt werden, ist wegen der Vielzahl der zu vergleichenden Daten eine Kontrolle der Effizienz und der Entdeckung möglicher Schwachstellen extrem schwierig. Insbesondere bei der Störbeseitigung in Telekommunikationsnetzen werden zur Bearbeitung einer Störungsmeldung, beginnend mit der Aufnahme und abschließend mit der Dokumentation des Prozesses und gegebenenfalls mit der Rückmeldung an den Kunden, mehrere Bearbeitungsschritte erforderlich, die von verschiedenen Personen bzw. Stellen durchgeführt werden und die insgesamt zur Bearbeitungszeit beitragen. Dabei fallen sehr große Datenmengen an.

Aufgabe der vorliegenden Erfindung ist es, die Transparenz der bei der Analyse des zeitlichen Ablaufs von Prozessen anfallenden Daten zu erhöhen. Dabei soll die Analyse in Echtzeit (on-line) erfolgen, so daß die durch die Analyse gewonnenen Daten frühstmöglich während des Ablaufs der Prozesse zur Verfügung stehen.

Diese Aufgabe wird erfindungsgemäß dadurch gelöst, daß die Dauern der Zeitabschnitte jeweils eines Prozesses einem Computer zugeführt, quadriert, normiert und in einem Speicher als Vektor abgelegt werden und daß die Vektoren mehrerer Prozesse in Gruppen (Cluster) aufgeteilt werden, wobei die Vektoren jeweils innerhalb einer Gruppe statistisch verarbeitet werden. Damit kann unmittelbar während der wiederholt ablaufenden Prozesse deren Verhalten bewertet werden (on-line process analyzing).

Bei dem erfindungsgemäßen Verfahren ist die Zahl der Zeitabschnitte jeweils eines Prozesses, das heißt die Zahl der Komponenten der Vektoren, an sich nicht begrenzt. Die Bildung der Länge des Vektors erfolgt durch Addition der Quadrate der Komponenten. Die Vektoren befinden sich somit in einem n-dimensionalen Raum. Das Ladeverfahren erfolgt über die Cluster-Methode. Die Cluster werden durch Trainingsrecords angelegt. Unbekannte (neue) Vektoren werden durch vorhandene Cluster identifiziert. Dort, wo ein minimierter Differenz-Vektor zum Clusterzentrum auftritt, wird der neue Vektor hinzugefügt. Es folgt eine Zuordnung des $n_1$-Vektors in den $n_1$-euklidischen Raum, des $n_2$-Vektors in den $n_2$-euklidischen Raum usw.

Außer bei dem Prozeß der Störbeseitigung in Telekommunikationsnetzen kann das erfindungsgemäße Verfahren bei allen in mehreren Zeitabschnitten ablaufenden Prozessen, wie Arbeits-, Bearbeitungs- und Fertigungsprozessen, durchgeführt werden.

Zur Ermittlung der Cluster ist gemäß einer Weiterbildung des erfindungsgemäßen Verfahrens vorgesehen, daß ein die Menge aller dargestellten Vektoren enthaltender Raum in vorgegebene Suchräume aufgeteilt wird, daß diejenigen Suchräume ermittelt werden, in denen sich Anhäufungen von Vektoren befinden und daß die Vektoren jeweils in diesen Anhäufungen als Gruppen statistisch verarbeitet werden.

Hierbei ist eine "Schwerpunktberechnung" der Clusterdaten relativ zum Clusterzentrum sehr nützlich, da hierdurch auf eine Vektorfeldanalyse sowie auf die Änderungsgeschwindigkeit in der On-Line-Datenbank Rückschlüsse gezogen werden können. Außerdem kann eine Verfolgung der Vektorraumübergänge (beispielsweise Störungsnummer Vektorraum) eine Aussage über den Status in den Zeitabschnitten ermöglichen.

Die Schwerpunktberechnung in den Clustern erfolgt nach folgenden Gleichungen:

$$\bar{x} = \frac{x_1 + x_2 + \ldots x_n}{n} \; ; \; \bar{y} = \frac{y_1 + y_2 + \ldots y_n}{n} \; ;$$

$$\bar{z} = \frac{z_1 + z_2 + \ldots z_n}{n} \; ; \; \bar{v} = \frac{v_1 + v_2 + \ldots v_n}{n} \; ;$$

Eine vorteilhafte Ausgestaltung des erfindungsgemäßen Verfahrens besteht darin, daß die Verarbeitung mit digitalen Filtern erfolgt. Dabei ist vorzugsweise vorgesehen, daß die Zeitabschnitte derart normalisiert werden, daß der Vektor der maximalen Bearbeitungszeit eine vorgegebene Länge aufweist.

Eine aussagekräftige Verarbeitung ist insbesondere möglich, wenn eine Normalisierung nach den Gleichungen $X_N = x/(n \cdot x_{max})$, $Y_N = y/(n \cdot y_{max})$, $Z_N = z/(n \cdot z_{max}) \ldots$ erfolgt, wobei $X_N$, $Y_N$, $Z_N \ldots$ die normalisierten Zeitabschnitte, $x_{max}$, $y_{max}$, $z_{max} \ldots$ die maximal zu verarbeitenden Zeitabschnitte und n die Zahl der Zeitabschnitte (Komponenten) je Bearbeitungszeit sind. Eine Transformation in den euklidischen Raum ergibt sich dann als $T^2 = X_N^2 + Y_N^2 + Z_N^2 + \ldots$ oder

$$T = (X_N^2 + Y_N^2 + Z_N^2 + \ldots)^{\frac{1}{2}}.$$

Die zur Steuerung der Prozesse, insbesondere zur Behebung von Schwachstellen erforderlichen Informationen sind im allgemeinen bei vielen beobachteten Prozessen möglich, wozu eine Weiterbildung des erfindungsgemäßen Verfahrens darin besteht, daß für eine vorgegebene Erhebungsdauer je ein Vektor pro Prozeß berechnet und gespeichert wird und daß die Vektoren mit Methoden der Statistik verarbeitet werden. Insbesondere ist dabei vorgesehen, daß ein den Mittelwert darstellender Vektor berechnet wird.

Langfristige Änderungen können mit dem erfindungsgemäßen Verfahren dadurch erkannt werden, daß mehrere Mittelwerte aus während aufeinanderfolgender Erhebungsdauern berechneten Vektoren gebildet werden.

Außerdem kann es bei dem erfindungsgemäßen Verfahren durch das Erstellen der Verteilungsfunktion durch Transformation der Vektoren in die Gauß'sche Normalverteilung vorteilhaft sein.

Zur Veranschaulichung der Analyse kann gemäß einer Weiterbildung vorgesehen sein, daß die entstehenden Vektoren räumlich dargestellt werden.

Die Übersichtlichkeit kann bei dieser Weiterbildung dadurch erhöht werden, daß ferner ein Kugelabschnitt dargestellt wird, dessen Radius eine maximale Bearbeitungszeit angibt, die verarbeitet werden kann. Dabei ist insbesondere vorgesehen, daß die Zeitabschnitte derart normalisiert werden, daß der Vektor der maximalen Bearbeitungszeit eine vorgegebene Länge aufweist.

Auch bei der Darstellung kann vorgesehen sein, daß die für eine vorgegebene Erhebungsdauer für jeweils einen Prozeß berechneten Vektoren dargestellt werden und/oder daß mehrere Mittelwerte, die aus während aufeinanderfolgender Erhebungsdauern berechneten Vektoren gebildet sind, dargestellt werden.

Eine Ersparnis von Rechenzeit und Speicherplatz kann bei einer Weiterbildung des erfindungsgemäßen Verfahrens dadurch erzielt werden, daß die Vektoren vor einer statistischen Verarbeitung und/oder Speicherung einer Vektorquantisierung unterzogen werden.

Ausführungsbeispiele der Erfindung sind in der Zeichnung anhand mehrerer Figuren dargestellt und in der nachfolgenden Beschreibung näher erläutert. Es zeigt:

Fig. 1 schematisch den Ablauf eines Prozesses bei der Störbeseitigung in einem Telekommunikationsnetz,

Fig. 2 die Zeitabschnitte bei einem Prozeß gemäß Fig. 1,

Fig. 3 ein Flußdiagramm zur Erläuterung des erfindungsgemäßen Verfahrens,

Fig. 4 Darstellungen verschiedener Vektoren,

Fig. 5 die Bearbeitung eines Clusters von Sektoren und

Fig. 6 eine daraus resultierende Gauß'sche Verteilung.

Mit Pfeilen 1 angedeutete Störungsmeldungen treffen bei einer Störungsannahme 2 ein. Bei 3 wird je angenommener Störung ein Datensatz angelegt. Schließlich werden die Meldungen und die bei der Bearbeitung der Meldung anfallenden Daten in einer Datenbank 4 abgelegt, die auch die sogenannten Kopf- und Arbeitsdaten des Netzmanagement MNSL und die Disposition der zur Verfügung stehenden Einsatzkräfte innerhalb der Baubezirke BBN enthält. Aus der Datenbank 4 wird bei 5 ein Störungsdatensatz extrahiert, worauf bei 6 ein Analyse-Tool eingesetzt wird, um den Arbeitskräfteeinsatz optimal steuern zu können. Schließlich erfolgt bei 7 die graphische Darstellung der Ergebnisse. Mit einem Doppelpfeil 8 ist die jeweilige Bearbeitungszeit von der Kundenannahme bis zur Störbeseitigung angedeutet.

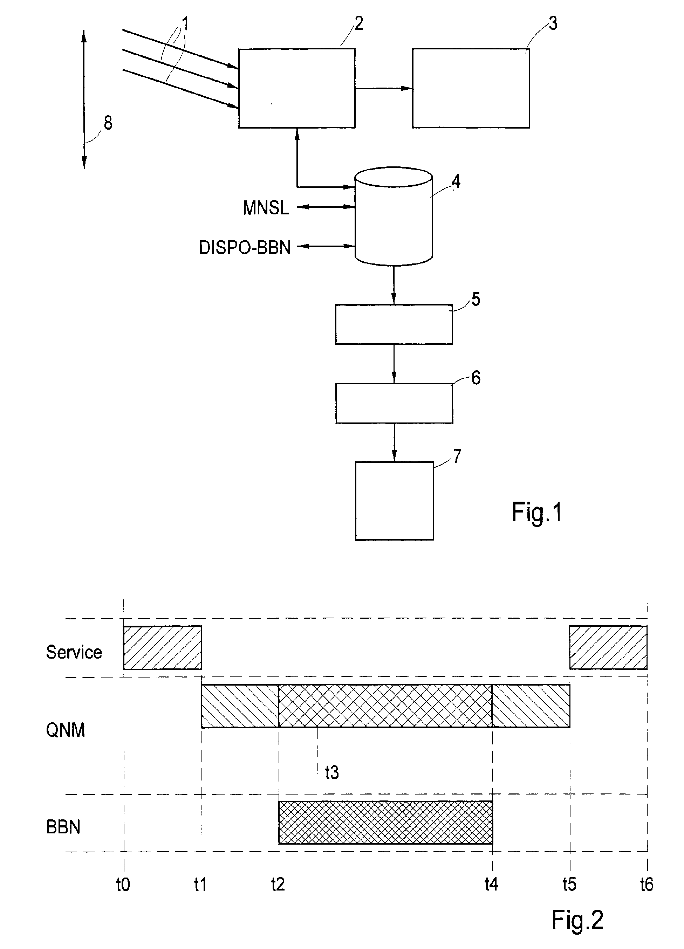

Anhand von Fig. 2 wird die Zusammensetzung der Bearbeitungszeit erläutert. So wird beispielsweise nach Eintreffen einer Störungsmeldung bei t0 die Zeit bis t1 benötigt, um in einer Service-Abteilung die Vorprüfung und Diagnose durchzuführen. Im Qualitäts-Netz-Management QNM werden dann eine Sichtung der Diagnose, eine Wertung und die Störungseingrenzung vorgenommen, was bis zur Zeit t2 dauert. Je nach Zuständigkeit erfolgt die Störbeseitigung zwischen t2 und t4 entweder bei QNM oder durch geeignete Arbeitsgruppen BBN. Bei t3 ist eine Rückmeldung nach maximal 2 Stunden vorgesehen.

Ist die Störung bei t4 beseitigt, so erfolgen bei QNM abschließende Arbeiten sowie die Rückmeldung an die Service-Abteilung, was bei t5 beendet wird. Schließlich benötigt die Service-Abteilung bis t6, um den gesamten Vorgang abzuschließen und eine Rückmeldung an den Kunden durchzuführen.

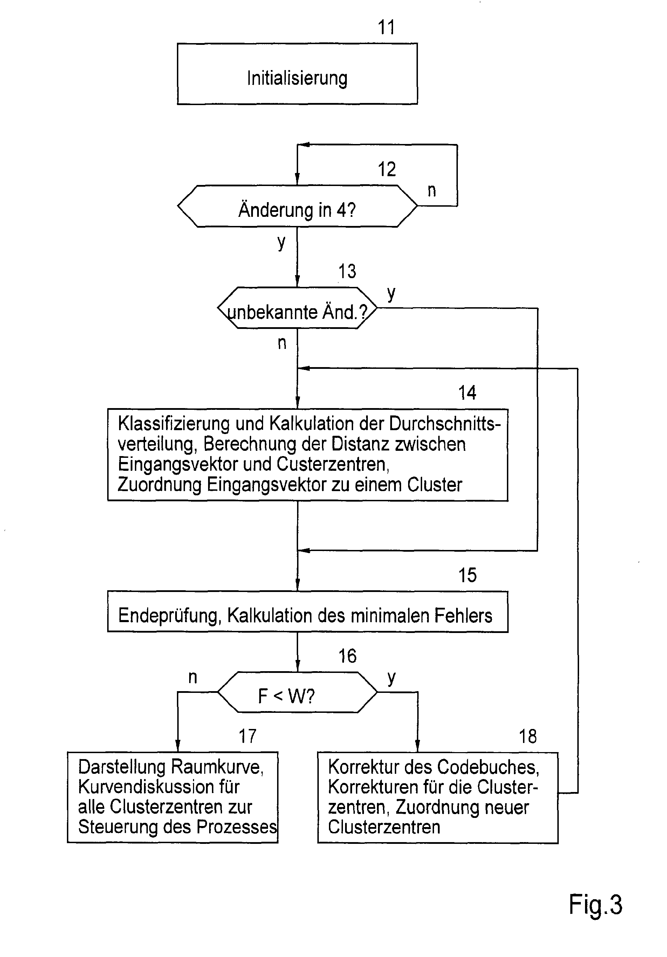

Vor dem Eingehen auf Fig. 3 wird im folgenden die Vektorquantisierung kurz erläutert:
Der ursprüngliche Datensatz wird in einzelne aus Elementen bestehende Blöcke aufgeteilt. Diese Blöcke werden als ursprüngliche Vektoren identifiziert, deren Dimension durch die Anzahl der Elemente innerhalb eines Blocks bestimmt ist. Dann werden diese Vektoren mit Codevektoren aus einem Codebuch verglichen. Der quantisierte Vektor ist ein Codevektor, in welchem Abweichungsmaße, welche den Abstand zwischen dem ursprünglichen Vektor und dem Codevektor darstellen, minimiert werden. Das Codebuch wird durch einige Regeln erzeugt. Der Index des Codevektors bestimmt eindeutig den quantisierten Vektor.

Bei der Wiedergabe wird das gleiche Codebuch verwendet - im Falle einer Übertragung ein Codebuch, das zuvor übertragen wurde. Beim Empfang einer Anzahl von Indizes erhält man unter Verwendung des Codebuches den richtigen Codevektor zurück. Da die Anzahl von Bits zur Übertragung bzw. Speicherung eines Index wesentlich kleiner als die Zahl der Bits eines ursprünglichen Vektors ist, wird somit die zu speichernde oder zu übertragende Datenmenge wesentlich verringert.

Mathematisch läßt sich die Vektorquantisierung wie folgt beschreiben:
Der N-dimensionale ursprüngliche Vektor hat beispielsweise die Form $X = [x_1, x_2 ..., x_N]^T$. Der ursprüngliche Vektor X wird dann durch den Prozeß der Vektorquantisierung in einen N-dimensionalen realen Vektor Y mit diskreten Amplitudenwerten abgebildet. Dieses Verfahren wird Quantisierung von X in Y genannt, wobei Y der quantisierte Wert von X ist, d.h. Y = q(X), wobei q der Operator der Quantisierung ist. Als eine Regel dazu kann Y die Werte aus einem begrenzten Wertesatz Z = $\{Y_j, 1 \leq j \leq L\}$ einnehmen, wobei Z das Codebuch ist, L die Größe des Codebuches, $\{Y_j\}$ der Satz von Codevektoren, $Y_j = \{y_i, 1 \leq i \leq N\}$ ist der Codevektor, y ist der quantisierte Koordinatenwert. Um ein Codebuch zu erzeugen, wird der N-dimensionale Raum der ursprünglichen Vektoren in L Teilräume Cj aufgeteilt. Dann ist Yj eine Darstellung von Cj. Somit ist X quantisiert als Yj, wenn X innerhalb von Cj liegt. Wenn N = 1 ist, ist diese Vektorquantisierung auf eine skalare Quantisierung reduziert.

Fig. 3 zeigt als Flußdiagramm ein Ausführungsbeispiel für das bei 6 (Fig. 1) eingesetzte Analyse-Tool. Eine Initialisierung bei 11 erfolgt durch Anlegen eines Trainingsablaufes, jedes Cluster muß durch mindestens zehn Vektoren initialisiert werden - mehr Vektoren sind besser. Der Trainingsablauf kann erzeugt werden durch Ziehen einer Zufallsprobe aus allen verfügbaren Vektoren. Danach wird geprüft, ob Änderungen in der Datenbank 4 (Fig. 1) vorliegen, beispielsweise ein neuer Datensatz oder ein um einen Zeitabschnitt ergänzter Datensatz. Ist dies nicht der Fall, wird der Schritt 12 wiederholt.

Wenn eine Änderung erkannt wird, verzweigt sich der Ablauf bei 13 in Abhängigkeit davon, ob es sich um eine neue unbekannte Änderung handelt. Ist dieses nicht der Fall, wird bei 14 eine Klassifizierung und Kalkulation der Durchschnittsverteilung sowie die Berechnung der Distanzen zwischen dem Eingangsvektor und den Clusterzentren vorgenommen. Anhand der geringsten Distanz erfolgt eine Zuordnung der Eingangsvektoren zu einem der Cluster. Danach und für den Fall, daß bei 13 eine neue unbekannte Änderung festgestellt wurde, wird bei 15 eine Endeprüfung und die Kalkulation des minimalen relativen Fehlers F vorgenommen. Ist dieser kleiner als ein vorgegebener Wert W, ist davon auszugehen, daß die Clusterzentren zu nahe beieinander liegen oder daß die zu einem Cluster gehörenden Vektoren nicht normalverteilt sind. Für diesen Fall sollte eine andere Klassifizierung und Kalkulation vorgenommen werden.

Bei 16 erfolgt deshalb eine Verzweigung in Abhängigkeit davon, ob der Fehler F kleiner als der Wert W ist. Ist dieses der Fall, wird bei 18 die Korrektur des Codebuches und eine Zuordnung neuer Clusterzentren vorgenommen. Es gibt dort Korrekturen für die Clusterzentren und für jeden Vektor, der dem Clusterzentrum zugeordnet wurde. Die neuen Clusterzentren-Koordinaten, wie Mittelwert und Varianz, die jedem Cluster zugeordnet sind, werden durch Sprung in Schritt 14 neu berechnet.

Ist jedoch bei 16 der Fehler nicht kleiner als der Wert W, wird bei 17 die Raumkurve dargestellt. Ferner erfolgen für alle Clusterzentren Kurvendiskussionen (Bildung von Extremwerten, Extrapolationen) zur Steuerung des Prozesses. Die Schritte 12 bis 17 werden zwar jeweils nacheinander durchlaufen. Wegen der großen zu verarbeitenden Datenmenge können mehrere der dargestellten Abläufe parallel erfolgen.

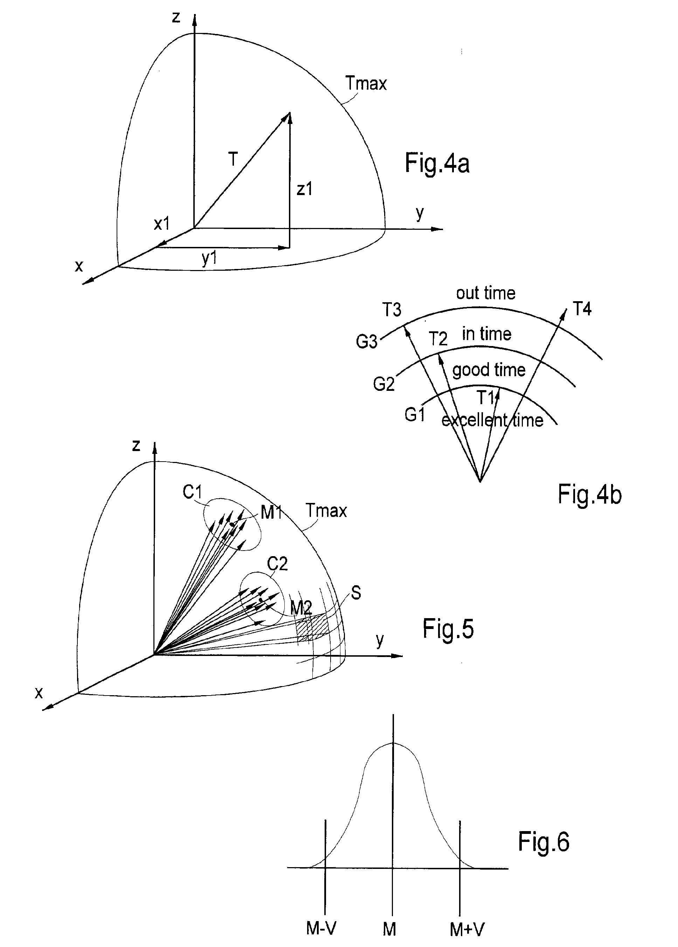

Fig. 4a zeigt eine räumliche Darstellung einer Störbeseitigung, die in den Zeitabschnitten t0 bis t1, t1 bis t5 und t5 bis t6 abläuft, die als Vektoren x1, y1 und z1 bezeichnet sind. Der resultierende Vektor T repräsentiert die gesamte Bearbeitungszeit und befindet sich wegen der ausschließlich positiven Quadratsumme nur in einem Quadranten. Dabei findet eine Normalisierung der einzelnen Zeitabschnitte wie folgt statt: Es werden die verwendeten Aufzeichnungsdimensionen $X_N = x/(3 \cdot x_{max})$; $Y_N = y/(3 \cdot y_{max})$; $Z_N = z/(3 \cdot z_{max})$; .... Die normierten Zeitabschnitte unterliegen einer Transformierung in den euklidischen Raum über die Gleichung $X^2 + Y^2 + Z^2 + ... = T^2$. Die maximale Bearbeitungszeit ist durch ein Kugelsegment $T_{max}$ dargestellt.

Fig. 4b zeigt schematisch verschiedene Vektoren T1, T2, T3, T4 verglichen mit Kreisen, welche Grenzen G1, G2, G3 für die Bearbeitungszeit darstellen, nämlich Grenzen zwischen den Bereichen "excellent time", "good time", "in time" und "out time". Für den Vergleich mit den Grenzen ist eine Berechnung der Quadratwurzel nicht erforderlich, wenn die Grenzen entsprechend als quadratische Werte festgelegt sind.

Fig. 5 zeigt eine erfindungsgemäße Darstellung nach einer vorgegebenen Beobachtungszeit, wobei sich zwei Cluster C1, C2 mit Vektoren gebildet haben. Für jeden dieser Cluster werden ein Mittelwert M1, M2 sowie die Varianz V (Fig. 5) berechnet. Zur Ermittlung der Cluster wird in Suchräumen S, die - wie in Fig. 4 angedeutet - von Breitenkreisen, Längenkreisen und Kugeloberflächen begrenzt sind, jeweils die Anzahl der Vektoren bestimmt. Suchräume mit einer hohen Anzahl von Vektoren werden als zu einem Cluster gehörend angenommen. Suchräume mit wenigen Vektoren trennen Cluster voneinander.

Die Darstellungen gemäß den Figuren 3 bis 5 können mit Hilfe eines Bildschirmes oder per Drucker erfolgen. Ist nur eine Weiterverarbeitung der Vektoren, beispielsweise im Sinne von Fig. 6 vorgesehen, kann die Darstellung auch im Speicher eines Rechners ohne sichtbare Ausgabe erfolgen.

Die bei dem erfindungsgemäßen Verfahren vorteilhaft anwendbare Vektorquantisierung (vq) ist eine Art Blockquantisierung. Die Vektorquantisierung ist eine gemeinsame Quantisierung von Elementen oder Parametern in einem ursprünglichen Signal als gemeinsamer Vektor. Im Gegensatz zur Vektorquantisierung wird in der benutzten skalaren Quantisierung jedes Element des ursprünglichen Signals jeweils für sich quantisiert.

Die Darstellung der Raumkurve über dem Erhebungszeitpunkt (on-line process) im Cluster mit der Rückführung der Gewichtung anhand der durch die zuvor entnommene Gewichtung durch die Normalisierung beim Ladezeitpunkt gibt Aufschluß über die Gewichtung der unterschiedlichen Kriterien. Eine Korrelation der Raumkurven zwischen den Clustern sowie innerhalb des Clusters mit zurückliegenden Zeitabschnitts-Raumkurven (Monat, Jahr Tag, Stunde) zeigt die Zusammenhänge auf.

**Patentansprüche**

1. Verfahren zur Analyse des zeitlichen Ablaufs von Prozessen in Echtzeit, insbesondere von Störungsbeseitigungen in Telekommunikationsnetzen, wobei die Bearbeitungszeit mehrere Zeitabschnitte umfaßt, **dadurch gekennzeichnet, daß** die Dauern der Zeitabschnitte jeweils eines Prozesses einem Computer zugeführt, quadriert, normiert und in einem Speicher als Vektor abgelegt werden und daß die Vektoren mehrerer Prozesse in Gruppen (Cluster) aufgeteilt werden, wobei die Vektoren jeweils innerhalb einer Gruppe statistisch verarbeitet werden.

2. Verfahren nach Anspruch 1, **dadurch gekennzeichnet, daß** ein Ladeverfahren über die Cluster-Methode mit folgenden Schritten erfolgt:

   - die Cluster werden durch Trainingsrecords angelegt,
   - unbekannte (neue) Vektoren werden durch vorhandene Cluster identifiziert,
   - wo ein minimierter Differenz-Vektor zum Clusterzentrum auftritt, wird der neue Vektor hinzugefügt,
   - es folgt eine Zuordnung jeweils des $n_i$-Vektors in den $n_i$-euklidischen Raum.

3. Verfahren nach einem der Ansprüche 1 oder 2, **dadurch gekennzeichnet, daß** ein die Menge aller ermittelten Vektoren enthaltender Raum in vorgebene Suchräume aufgeteilt wird, daß diejenigen Suchräume ermittelt werden, in denen sich Anhäufungen von Vektoren befinden und daß die Vektoren jeweils in diesen Anhäufungen als Gruppen statistisch verarbeitet werden.

4. Verfahren nach einem der vorhergehenden Ansprüche, **dadurch gekennzeichnet, daß** die Verarbeitung mit digitalen Filtern erfolgt.

5. Verfahren nach einem der vorhergehenden Ansprüche, **dadurch gekennzeichnet, daß** die Zeitabschnitte derart normalisiert werden, daß der Vektor der maximalen Bearbeitungszeit eine vorgegebene Länge aufweist.

6. Verfahren nach Anspruch 5, **dadurch gekennzeichnet, daß** die Normalisierung nach den Gleichungen $X_N = x/(n \cdot x_{max})$, $Y_N = y/(n \cdot y_{max})$, $Z_N = z/$

$(n \cdot z_{max})$ ... erfolgt, wobei $X_N$, $Y_N$, $Z_N$ ... die normalisierten Zeitabschnitte, $x_{max}$, $y_{max}$, $z_{max}$ ... die maximal zu verarbeitenden Zeitabschnitte und n die Zahl der Zeitabschnitte (Komponenten) je Bearbeitungszeit sind.

7. Verfahren nach einem der vorhergehenden Ansprüche, **dadurch gekennzeichnet, daß** für eine vorgegebene Erhebungsdauer je ein Vektor pro Prozeß berechnet und gespeichert wird und daß die Vektoren mit Methoden der Statistik verarbeitet werden.

8. Verfahren nach Anspruch 7, **dadurch gekennzeichnet, daß** ein den Mittelwert darstellender Vektor berechnet wird.

9. Verfahren nach einem der Ansprüche 7 oder 8, **dadurch gekennzeichnet, daß** mehrere Mittelwerte aus während aufeinanderfolgender Erhebungsdauern berechneten Vektoren gebildet werden.

10. Verfahren nach einem der Ansprüche 7 bis 9, **gekennzeichnet durch** das Erstellen der Verteilungsfunktion **durch** Transformation der Vektoren in die Gauß'sche Normalverteilung.

11. Verfahren nach einem der vorhergehenden Ansprüche, **dadurch gekennzeichnet, daß** die entstehenden Vektoren räumlich dargestellt werden.

12. Verfahren nach Anspruch 11, **dadurch gekennzeichnet, daß** ferner ein Kugelabschnitt dargestellt wird, dessen Radius eine maximale Bearbeitungszeit angibt, die verarbeitet werden kann.

13. Verfahren nach einem der Ansprüche 11 oder 12, **dadurch gekennzeichnet, daß** die für eine vorgegebene Erhebungsdauer für jeweils einen Prozeß berechneten Vektoren dargestellt werden.

14. Verfahren nach einem der Ansprüche 11 bis 13, **dadurch gekennzeichnet, daß** mehrere Mittelwerte, die aus während aufeinanderfolgender Erhebungsdauern berechneten Vektoren gebildet sind, dargestellt werden.

15. Verfahren nach einem der vorhergehenden Ansprüche, **dadurch gekennzeichnet, daß** die Vektoren vor einer statistischen Verarbeitung und/oder Speicherung einer Vektorquantisierung unterzogen werden.

Fig.1

Fig.2

11

Initialisierung

12

Änderung in 4? — n

y

13

unbekannte Änd.? — y

n

14

Klassifizierung und Kalkulation der Durchschnittsverteilung, Berechnung der Distanz zwischen
Eingangsvektor und Custerzentren,
Zuordnung Eingangsvektor zu einem Cluster

15

Endeprüfung, Kalkulation des minimalen Fehlers

16

n — F < W? — y

17

Darstellung Raumkurve,
Kurvendiskussion für
alle Clusterzentren zur
Steuerung des Prozesses

18

Korrektur des Codebuches,
Korrekturen für die Clusterzentren, Zuordnung neuer
Clusterzentren

Fig.3

Fig.4a

Fig.4b

Fig.5

Fig.6

8